# EUROPÄISCHE PATENTSCHRIFT

(11) **EP 2 611 634 B1**
(45) Veröffentlichungstag und Bekanntmachung des Hinweises auf die Patenterteilung: **14.05.2014**
(21) Anmeldenummer: 11757768.4
(22) Anmeldetag: 31.08.2011
(51) Int. Cl.: B60H 1/00

(54) **KLIMAANLAGE FÜR EIN FAHRZEUG SOWIE VERFAHREN ZUM KLIMATISIEREN EINES FAHRZEUGS**
AIR-CONDITIONING SYSTEM FOR A VEHICLE AND METHOD FOR AIR-CONDITIONING A VEHICLE
INSTALLATION DE CLIMATISATION POUR UN VÉHICULE AINSI QUE PROCÉDÉ DE CLIMATISATION D'UN VÉHICULE

(30) Priorität: 30.07.2011 DE 102011109055; 04.09.2010 DE 102010044416
(43) Veröffentlichungstag der Anmeldung: 10.07.2013
(73) Patentinhaber: Volkswagen Aktiengesellschaft, 38440 Wolfsburg (DE)
(72) Erfinder: FÜRLL, Matthias, 38162 Weddel (DE); SCHMITT, Stefan, 38458 Velpke (DE); SCHRÖTER, Horst, Achim, 38108 Braunschweig (DE); BRÜCK, Stefan, 38442 Wolfsburg (DE); HOMANN, Gregor, 38442 Wolfsburg (DE)
(86) Internationale Anmeldenummer: PCT/EP2011/004378
(87) Internationale Veröffentlichungsnummer: WO 2012/028307

(56) Entgegenhaltungen:
- EP-A1- 1 961 593
- DE-A1- 10 301 006
- DE-A1- 10 343 818
- DE-A1- 19 644 583
- US-A1- 2004 060 316

## Beschreibung

Die Erfindung betrifft eine Klimaanlage für ein Fahrzeug sowie ein Verfahren zum Klimatisieren eines Fahrzeugs jeweils nach den Oberbegriffen der unabhängigen Patentansprüche.

Der Einsatz von Kältemittelkreisläufen in Klimaanlagen in einem Wärmepumpenbetrieb einerseits und einem Kälteanlagenbetrieb andererseits ist bekannt. Derartig betriebene Klimaanlagen sind insbesondere zum Einsatz bei Kraftfahrzeugen attraktiv, da moderne Motorkonzepte weniger Abwärme, die zur Heizung des Fahrgastraumes eingesetzt werden kann, produzieren als frühere. Aus DE 10 310 992 B4 ist bereits ein kombinierter Kälteanlagen- und Wärmepumpenkreislauf mit einem Verdichter, einem Außenwärmeübertrager, einem innern Wärmeübertrager und einem Innenwärmeübertrager bekannt. Im Wärmepumpenbetrieb wird das im Verdichter komprimierte Kältemittel über ein Mehrwegventil zum Innenwärmeübertrager geleitet, wo Wärme an die Luft für den Fahrgastinnenraum vom Kältemittel abgegeben wird. Danach durchströmt das abgekühlte Kältemittel ein beidseitig durchströmbares Expansionsorgan und gelangt mit geringem Druck in den inneren Wärmeübertrager, der sich in der Wärmepumpenschaltung auf niedrigem Druckniveau des Kältemittel befindet, anschließend in den Außenwärmeübertrager, wo es unter Wärmeaufnahme verdampfen soll. Über den Akkumulator gelangt der Kältemitteldampf dann in den ebenfalls auf niedrigem Druckniveau befindlichen inneren Wärmeübertrager zur Niederdruckseite des Kompressors.

Aus EP 1 472 106 B1 ist ferner eine Klimaanlage für ein Fahrzeug bekannt mit einem Verdampfer, einem Verdichter, einem Kondensator und einem Expansionsventil, die einem Kältemittelkreislauf derart angeordnet sind, dass der Verdichter im Kühlbetrieb der Klimaanlage ein Kältemittel über den Kondensator und das Expansionsventil sowie im Heizbetrieb unter Umgehung des Kondensators zum Verdampfer fördert. Ferner weist die Klimaanlage einen Kühlmittelkreislauf einer Wärmequelle auf, wobei der Kältemittelkreislauf über einen Koppelwärmetauscher an den Kühlmittelkreislauf der Wärmequelle gekoppelt ist. Der KoppelWärmetauscher ist in Strömungsrichtung des Kältemittels zwischen dem Verdichter und dem Expansionsventil angeordnet.

Ferner ist aus DE 10 123 830 A1 eine Klimaanlage bekannt mit an einem Kühlflüssigkeitskreislauf einer Brennkraftmaschine angeschlossenen Heizungswärmetauscher, dem in Strömungsrichtung eines Gebläses ein Verdampfer vorgeschaltet ist, wobei ein Verdichter in einen Kühlmittelkreislauf während eines Kühlbetriebes ein Kältemittel über einen Gaskühler sowie über ein Expansionsventil und während eines Heizbetriebs unter Umgehung des Gaskühler fördert. Zwischen dem Kühlmittelkreislauf und dem Kältemittelkreislauf ist ein Koppelwärmetauscher vorgesehen, der zudem auf der Seite des Kältemittelkreislaufes auf der Druckseite des Verdichters vor dem Gaskühler angeordnet ist.

Die DE 10 2005 048 241 A1 offenbart eine Fahrzeugklimaanlage mit einem thermodynamischen Primärkreislauf, der einen über eine Schalteinrichtung gesteuerten Verdichter umfasst, und mit einem dem Primärkreislauf thermodynamisch koppelbaren Sekundärkühlkreislauf zur Kühlung von Elektroaggregaten, zum Beispiel einer Batterie, der zumindest ein auf ein Signal der Schalteinrichtung des Primärkreises ansprechendes Bauteil enthält. Die US 2003 0182961 A1 betrifft eine Klimaanlage für ein Abteil. Die Klimaanlage weist einen Kompressor, einen externen Wärmetauscher und einen internen Wärmetauscher auf. Außerdem weist die Klimaanlage einen Kühlwärmetauscher und eine dem Kühlwärmetauscher vorgeschaltete Dekompressionsvorrichtung auf, die in einem Kühlbetrieb geöffnet ist. Die DE 103 01 006 A1 betrifft einen Heiz-/Kühlkreislauf für ein Kraftfahrzeug mit einem Verdampfer zur Abkühlung von einem Innenraum zuzuführender Luft, einem Heizwärmetauscher zur Aufheizung der dem Innenraum zuzuführenden Luft, einem Außenwärmetauscher mit einem Kompressor zum Fördern von Kältemittel, einem ersten Expansionsorgan, das dem Verdampfer zugeordnet ist, einem zweiten Expansionsorgan, das dem Außenwärmetauscher zugeordnet ist und Kältemittelleitungen, über welche die vorgenannten Komponenten miteinander verbunden sind, wobei eine Abtauschaltung des Kreislaufes den Kompressor, den Außenwärmetauscher und das zweite Expansionsorgan umfasst.

Aus der DE 196 44 583 B4 ist eine Fahrzeugklimaanlage mit einem Kältemittelkreislauf bekannt, wobei hochdruckseitig an einem Kompressor zwei seriell angeordnete Kondensatoren vorgesehen sind, von denen der eine im Heizbetrieb und im ReHeat-Betrieb der Anlage zur Aufheizung eines Klimatisierungsluftstroms ausgelegt ist und der andere Kondensator im Kühlbetrieb und optional im ReHeat-Betrieb der Anlage zur Abkühlung des Kältemittels durch einen in die Fahrzeugaußenumgebung abgeführten Kühlluftstrom ausgelegt ist.

Aus der DE 103 43 818 ist eine Klimaanlage für ein Fahrzeug offenbart, die den nächstliegenden Stand der Technik darstellt.

Aufgabe der vorliegenden Erfindung ist es, eine Klimatisierung eines Fahrzeugs mit einem kältemitteldurchströmbaren Wärmepumpen- und Kälteanlagenkreislauf zu schaffen, wobei auf eine besonders einfache Weise eine bedarfsabhängige Heizung des Fahrzeuginnenraums mittels eines Innenheizkondensators verwirklicht werden soll.

Die Aufgabe wird erfindungsgemäß mit den Merkmalen der unabhängigen Patentansprüche gelöst.

Eine erfindungsgemäße Klimaanlage für ein Fahrzeug mit einem von einem kältemitteldurchströmbaren als Wärmepumpen- und einem Kälteanlagenkreislauf ausgebildeten Kältemittelkreislauf und diesen zugeordnet, einem Kompressor, zumindest einem Außenwärmeübertrager und zumindest einem Innenwärmeübertrager, dem ein Innenheizkondensator zugeordnet ist und mit einer Vorrichtung zur Erzeugung eines mit dem Innenwärmeübertrager und dem Innenheizkondensator thermisch koppelbaren Luftstroms sowie einer Dosierungsvorrichtung, mittels der eine Durchströmung des Innenheizkondensators mit zumindest einem Teilstrom des thermisch gekoppelten Luftstroms dosierbar ist, zeichnet sich dadurch aus, dass
- in einem Wärmepumpenbetrieb das Kältemittel von der Hochdruckseite des Kompressors in den Innenheizkondensator förderbar ist oder gefördert wird, vom Innenheizkondensator durch ein Expansionsventil zum Innenwärmeübertrager förderbar ist oder gefördert wird, vom Innenwärmeübertrager durch ein beidseitig durchströmbares Expansionsventil zum Außenwärmeübertrager förderbar ist oder gefördert wird, vom Außenwärmeübertrager von der Niederdruckseite des Kompressors förderbar ist oder gefördert wird und
- in einem Kälteanlagenbetrieb das Kältemittel von der Hochdruckseite des Kompressors direkt in den Innenheizkondensator förderbar ist oder gefördert wird, vom Innenheizkondensator unter Umgehung des Expansionsventils zum Außenwärmeübertrager förderbar ist oder gefördert wird, vom Außenwärmeübertrager durch das beidseitig durchströmbare Expansionsventil zum Innenwärmeübertrager, vom Innenwärmeübertrager zur Niederdrucksseite des Kompressors förderbar ist.

Eine permanente Durchströmung des Innenheizkondensators ermöglicht, eine kurze Ansprechzeit eines mittels des Innenheizkondensators erfolgenden Heizens.

Die Anordnung eines Expansionsventils zwischen dem Innenheizkondensator und dem Verdampfer im Wärmepumpenkreislauf ermöglicht eine Wärmeabgabe an durch den Innenheizkondensator strömende Luft und, in Abhängigkeit von Temperatur und Feuchtigkeit des mit dem Innenwärmeübertrager gekoppelten Luftstroms eine flexibel zu steuernde Aufheizung oder Abkühlung des Luftstroms mittels des Innenwärmeübertragers. Das Expansionsventil ist vorzugsweise schaltbar, so dass keine weiteren Schaltkomponenten zur Verhinderung der Durchströmung im Kälteanlagenbetrieb erforderlich sind. Das Kältemittel ist im Wärmepumpenbetrieb und im Kälteänlagenbetrieb direkt in den Innenheizkondensator förderbar oder wird in diesen gefördert und es erfolgt eine permanente Durchströmung des Innenheizkondensators mit Kältemittel, wobei eine Durchströmung des Innenheizkondensators mit zumindest einem Teilstrom des thermisch gekoppelten Luftstroms mittels einer Dosiervorrichtung dosierbar ist und damit auf besonders einfache Weise eine Beeinflussung des Temperaturniveaus der in den Fahrzeuginnenraum einströmenden Luft erreichbar ist. Zweckmäßigerweise sind Innenwärmeübertrager und Innenheizkondensator im Gehäuse eines im Fahrzeug angeordneten Klimagerätes gemeinsam untergebracht. Der Innenwärmeübertrager ist insbesondere als Verdampfer ausgebildet. Bei dem Außenwärmeübertrager handelt es sich vorzugsweise um einen Kondensator oder Gaskühler, der im Wärmepumpenbetrieb als Verdampfer arbeitet. Die Vorrichtung zur Erzeugung des mit dem Wärmeübertrager und dem Innenheizkondensator thermisch gekoppelten Luftstroms ist insbesondere ein, vorzugsweise gesteuertes oder geregeltes Gebläse. Die thermische Kopplung des erzeugten Luftstroms mit dem Innenwärmeübertrager wird insbesondere durch Durchströmung des geeignet ausgebildeten Innenwärmeübertragers realisiert. Optional kann im Wärmepumpenkreislauf und/oder im Kältemittelkreislauf niederdruckseitig vor dem Kompressor ein Sammler angeordnet sein, mit dem der Kompressor vor Flüssigkeitsschlägen von nicht verdampften Kältemittel geschützt werden kann.

Für sämtliche Ausführungsformen gilt folgendes: Die von dem Kältemittel durchströmbaren Komponenten der Klimaanlage, wie beispielsweise Kompressor, Außenwärmeübertrager, Innenwärmeübertrager, Innenheizkondensator, Expansionsventil oder dergleichen sind über Kältemittelleitungen verbunden. Vorzugsweise ist zumindest eines der Expansionsventile, besonders bevorzugt jedes Expansionsventil, als thermostatisches oder elektronisches Expansionsventil ausgebildet. Beim thermostatischen Expansionsventil kann die in einen nachgeschalteten Verdampfer eingespritzte Kältemittelmenge temperaturabhängig geregelt werden. Die Regelung geschieht in Abhängigkeit der Überhitzung des Kältemitteldampfes am Verdampferaustritt. Es wird immer nur soviel Kältemittel in den Verdampfer eingespritzt, dass die gesamte eingespritzte Menge vollständig verdampfen kann. Elektronische Expansionsventile haben die gleiche Funktion wie die thermostatischen Expansionsventile, regeln jedoch die Flüssigkeitsmenge mittels Widerstandsthermometern.

In einer weiteren Ausführungsform der Erfindung ist ein vom Kältemittel durchströmbares Schaltventil vorgesehen, dass im Wärmepumpenkreislauf stromabwärts des Außenwärmeübertragers und stromaufwärts der Niederdruckshalter des Kompressors und im Kälteanlagenkreislauf stromabwärts des Innenwärmeübertragers und stromaufwärts des Außenwärmeübertragers angeordnet ist.

Zweckmäßig ist es ferner ein vom Kältemittel durchströmbares Absperrventil vorzusehen, dass im Wärmepumpenkreislauf stromabwärts des Expansionsventils und im Kälteanlagenkreislauf stromabwärts des Innenwärmetauschers und stromaufwärts der Niederdruckseite des Kompressors angeordnet ist.

Somit wird über das schaltbare Expansionsventil, das Umschaltventil und das Absperrventil die Umschaltung vom Wärmepumpenbetrieb zum Kälteanlagenbetrieb und umgekehrt auf besonders einfache Weise ermöglicht.

In einer weiteren Ausführungsform ist die Klimaanlage mittels eines ersten Fluid-Kältemittelwärmetauscher thermisch mit einem ersten Fluidkreislauf gekoppelt, der zumindest eine fluidseitig dem Fluid-Kältemittelwärmetauscher verbundene Wärme- und/oder Kältesenke umfasst. Bei der Wärme-/Kältesenke handelt es sich insbesondere von im Fahrzeug installierten fluiddurchströmten Aggregaten, beispielsweise um den Kühler einer Brennkraftmaschine, einer Elektromaschine oder einer Batterie des Fahrzeugs, über den eine beträchtliche Wärmemenge in die Klimaanlage ein - und/oder ausgekoppelt werden kann. Bei dem Fluid handelt es sich vorzugsweise um Wasser, dem auch um weitere Fluide beigemischt sein können.

Bei dem ersten sowie den weiteren im Folgenden erwähnten Fluid -Kältemittelwärmetauschen kann es sich um einen sogenannten Chiller handeln, die zunehmend im Automotivbereich zum Einsatz kommen. Einsatzzweck ist dabei die Kühlung von thermisch sensiblen Komponenten, die Wärmequellen darstellen, wie z.B. der erwähnten Hochvoltbatterien, Leistungselektronikkomponenten oder Ladegeräte. Chiller werden als kompakte und preiswerte Systeme angesehen, wobei im Automotivbereich bisher vorwiegend Plattenwärmeübertrager verwender werden. Ein derartiger Plattenwärmeübertrager ist beispielsweise aus der DE 10 2008 017 113 A1 bekannt, der eine Mehrzahl von parallel zueinander in einer Hochrichtung gestapelten Platten mit fluchtend angeordneten Durchbrechungen zur Durchführung und Abführung eines als Kältemittel ausgebildeten ersten Fluids und eines zweiten Fluids aufweist.

In einer weiteren Ausführungsform der Klimaanlage ist vorgesehen, dass der Kältemittelkreislauf und/oder der Wärmepumpenkreislauf sowie der Kälteanlagenkreislauf zwischen dem beidseitig durchströmbaren Expansionsventil und dem Außenwärmeübertrager einen ersten Verzweigungspunkt und auf der Niederdrucksseite des Kompressors einen ersten Anschlusspunkt aufweisen, wobei im Wärmepumpenbetrieb und/oder im Kälteanlagenbetrieb Kältemittel kältemittelseitig durch den Fluid-Kältemittelwärmetauscher vom Verzweigungspunkt zum Anschlusspunkt förderbar ist, sodass Wärmeenergie aus dem Fluidkreislauf entzogen oder diesem zugeführt werden kann und zum Heizen oder Kühlen des Fahrgastinnenraums genutzt werden kann.

Zweckmäßigerweise ist zwischen dem Verzweigungspunkt und dem Fluid-Kältemittelwärmetauscher ein zweites Expansionsventil angeordnet, sodass stromabwärts des Expansionsventils das Temperaturniveau des Kältemittels vor Durchströmen des Fluid-Kältemittelwärmetauschers reduziert werden kann.

In einer weiteren Ausführungsform der Erfindung ist ein Umschaltventil im Wärmepumpenkreislauf sowie im Kälteanlagenkreislauf zwischen Verzweigungspunkt und dem Fluid-Kältemittelwärmetauscher angeordnet, das von Kältemittel durchströmbar ist, mittels dem die Förderung von Kältemittel zum Fluid-Kältemittelwärmetauscher unterbrochen oder durch das zweite Expansionsventil freigegeben werden kann, oder mittels dem das zweite Expansionsventil überbrückt werden kann. Die Anordnung eines derartigen Umschaltventils erhöht auf einfache Weise die Flexibilität der Klimaanlage bei der Einstellung von Temperaturniveau des Fahrzeuginnenraums.

Eine weitere Ausführungsform der Klimaanlage zeichnet sich dadurch aus, dass der Kältemittelkreislauf und/oder der Wärmepumpenkreislauf sowie der Kälteanlagenkreislauf zwischen dem Innenwärmeübertrager und dem beidseitig durchströmbaren Expansionsventil einen zweiten Verzweigungspunkt und stromaufwärts der Niederdruckseite des Kompressors einen ersten Anschlusspunkt und einen zweiten Anschlusspunkt aufweisen, wobei im Wärmepumpenbetrieb und/oder im Kälteanlagenbetrieb Kältemittel durch den ersten Fluid-Kältemittelwärmetauscher vom zweiten Verzweigungspunkt zum ersten Anschlusspunkt und durch den zweiten Fluid-Kältemittelwärmetauscher vom zweiten Verzweigungspunkt zum zweiten Anschlusspunkt förderbar ist. Dies ermöglicht eine Aufteilung des Kältemittelflusses unmittelbar nach dem Verdampfer auf den Außenwärmeübertrager sowie die beiden Fluid-Kältemittelwärmetauscher_und damit die Einstellung eines definierten Energieeintrags in das Kältemittel über die genannten Komponenten. Ferner ermöglicht diese Ausführungsform Kühlen und Heizen mit dem zweiten Fluid-Kältemittelwärmetauscher, auch unabhängig vom Betrieb des Außenwärmetauschers. Ferner ermöglicht diese Ausführungsform ein paralleles Heizen des Innenraums des Fahrzeugs und ein Abtauen eines vereisten Außenwärmetauschers.

Es versteht sich, dass weitere, vierte, fünfte usw. Fluid-Kältemittelwärmetauscher zwischen dem zweiten Verzweigungspunkt und dem zweiten Anschlusspunkt in seriell oder parallel zum zweiten Fluid-Kältemittelwärmetauscher vorgesehen sein können.

Eine weitere Ausführungsform der Klimaanlage zeichnet sich dadurch aus, dass der Kältemittelkreislauf und/oder der Wärmepumpenkreislauf sowie der Kälteanlagenkreislauf zwischen dem Innenheizkondensator und dem ersten Expansionsventil einen dritten Verzweigungspunkt und stromaufwärts der Niederdruckseite des Kompressors einen dritten Anschlusspunkt aufweisen, wobei zwischen dem dritten Verzweigungspunkt und dem dritten Anschlusspunkt ein dritter Fluid-Kältemittelwärmetauscher angeordnet ist und im Wärmepumpenbetrieb und/oder im Kälteanlagenbetrieb Kältemittel durch den dritten Fluid-Kältemittelwärmetauscher vom dritten Verzweigungspunkt zum dritten Anschlusspunkt förderbar ist. Diese Ausführungsform ermöglicht über den dritten Fluid-Kältemittelwärmetauscher ein zusätzliches Heizen oder Kühlen, auch unabhängig vom Betrieb des Verdampfers.

Eine weitere Ausführungsform der Klimaanlage zeichnet sich dadurch aus, dass im ersten und/oder zweiten Fluidkreislauf ein Zusatzheizer angeordnet ist, mittels dem Wärme in den Kälteanlagenkreislauf einspeisbar ist, wobei diese Ausführungsform ein paralleles Heizen mittels Entnahme von Wärmeenergie aus der Luft und über den Zusatzheizer ermöglicht.

Ein erfindungsgemäßes Verfahren zum Klimatisieren eines Fahrzeugs zeichnet sich dadurch aus, dass die vorangehend beschriebene Klimaanlage in einem Wärmepumpenbetrieb oder einem Kälteanlagenbetrieb betrieben wird, wobei sowohl im Wärmepumpenbetrieb als auch im Kälteanlagenbetrieb das Kältemittel von der Hochdruckseite des Kompressors in den Innenheizkondensator gefördert wird. Die dabei erzielten Vorteile entsprechen denen der oben beschriebenen Klimaanlage.

In einer weiteren Ausführungsform der Erfindung wird das erste Expansionsventil im Wärmepumpenbetrieb von Kältemittel durchströmt und im Kälteanlagenbetrieb nicht von Kältemittel durchströmt.

In einer weiteren Ausführungsform der Erfindung durchströmt im Wärmepumpenbetrieb ein Anteil von zumindest 5%, vorzugsweise zumindest 7,5% des Luftmassenstroms des thermisch gekoppelten Luftstroms den Innenheizkondensator so, dass das Temperaturniveau des Fahrzeuginnenraums angehoben werden kann.

In einer weiteren Ausführungsform der Erfindung durchströmt im Kälteanlagenbetrieb ein Anteil von höchstens 1,5%, vorzugsweise höchstens 2,5% des Luftmassenstroms des thermisch gekoppelten Luftstroms den Innenheizkondensator und damit durch den Innenraumwärmeübertrager gekühlte Luft direkt im Fahrzeuginnenraum zugeführt werden, ohne vom Innenheizkondensator wesentlich aufgeheizt zu werden.

In einer weiteren Ausführungsform der Erfindung durchströmt ein Anteil von zumindest 1,5%, vorzugsweise zumindest 2,5% des Luftmassenstroms des thermisch gekoppelten Luftstroms den Innenheizkondensator im Kälteanlagenbetrieb, sodass vom Innenwärmetauscher abgekühlte und getrocknete Luft am Innenheizkondensator erwärmt wird, womit insbesondere in den Zwischenjahreszeiten auf einfache Weise eine zusätzliche Heizfunktion für den Fahrzeuginnenraum zur Verfügung gestellt werden kann.

Weitere Vorteile, Merkmale und Einzelheiten ergeben sich aus der nachfolgenden Beschreibung in der - gegebenenfalls unter Bezug auf die Zeichnung - zumindest ein Ausführungsbeispiel im Einzelnen beschrieben ist. Beschriebene und/oder dargestellte Merkmale bilden für sich oder in beliebiger sinnvoller Kombination die Erfindung, gegebenenfalls auch unabhängig von den Ansprüchen und können insbesondere auch Gegenstand einer oder mehrerer separater Erfindungen sein. Gleiche, ähnliche und/oder zumindest gleiche Teile sind mit Bezugszeichen versehen.

Es zeigen
- Figur 1: einen Wärmepumpen- und Kälteanlagenkreislauf, wobei sowohl im Wärmepumpenbetrieb als auch im Kälteanlagenbetrieb das Kältemittel von de Hochdruckseite des Kompressors in den Innenheizkondensator förderbar ist.
- Figur 2: einen Wärmepumpenkreislauf, der thermisch mit einer Wärme- und/oder Kältesenke gekoppelt ist.
- Figur 3: einen Kälteanlagenkreislauf der thermisch mit einer Wärme- und/oder Kältesenke gekoppelt ist.
- Figur 4: den Kälteanlagenkreislauf der Figur 3 in einer Reheat-Betriebsweise.
- Figur 5: eine Variante des Wärmepumpen- und Kälteanlagen-Kreislaufs der Figur 1 mit zwei Fluid-Kältemittelwärmetauschern
- Figur 5a: eine Modifikation der Kreisläufe der Figur 5
- Figur 6: einen Kälteanlagenkreislauf gemäß der Figur 5
- Figur 7: einen Wärmepumpenkreislauf gemäß der Figur 5
- Figur 8: einen Kälteanlagenkreislauf mit gleichzeitiger Abtaufunktion eines Außenwärmeübertragers
- Figur 9: eine weitere Variante der Kreisläufe der Figur 1 in einem Wärmepumpenbetrieb
- Figur 10: eine weitere Variante der Kreisläufe der Figur 1 in einem Kälteanlagenbetrieb

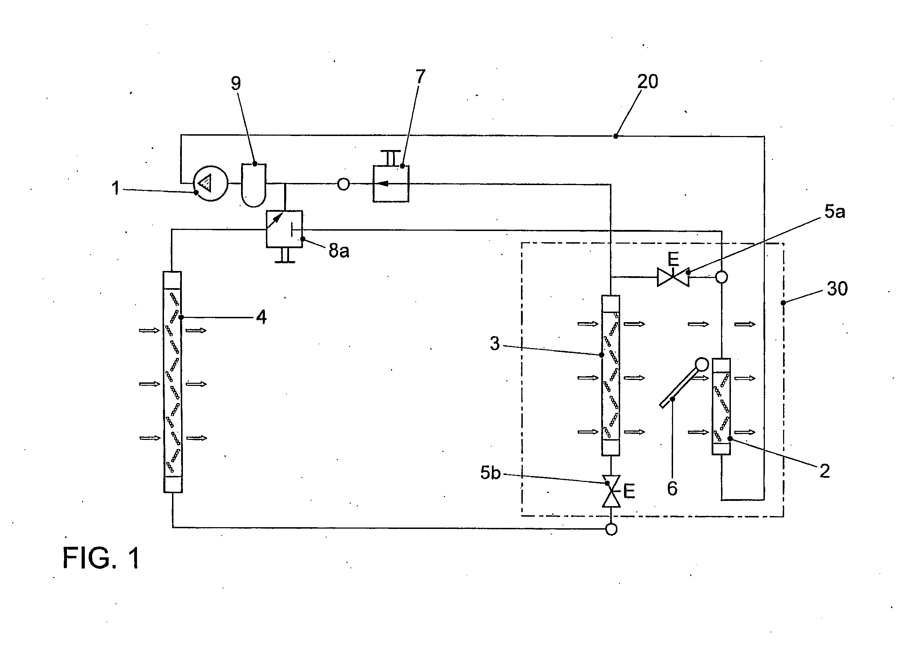

Figur 1 zeigt einen als Wärmepumpenkreislauf und Kälteanlagenkreislauf ausgebildeten Kältemittelkreislauf eines nicht näher dargestellten Fahrzeugs, insbesondere eines Kraftfahrzeugs. Sowohl der Wärmepumpenkreislauf als auch der Kälteanlagenkreislauf sind von einem Kältemittel durchströmbar und dienen zum Klimatisieren eines ebenfalls nicht näher dargestellten Innenraums mit einer Klimaanlage. Es versteht sich, dass die einzelnen Komponenten der Klimaanlage bzw. des Wärmepumpenkreislaufs sowie des Kälteanlagenkreislaufs über ein Steuergerät mit dazugehörigen Sensoren, Aktuatoren und elektrischen Anschlüssen gesteuert bzw. geregelt wird. Wärmepumpenkreislauf und Kälteanlagenkreislauf beinhalten insbesondere einen Kompressor 1, einen Innenheizkondensator 2, einen vorzugsweise als Verdampfer ausgebildeten Innenwärmetauscher 3, einen vorzugsweise als Kondensator, Gaskühler bzw. Verdampfer ausgebildeten Außenwärmeübertrager 4, Expansionsventile 5a, 5b, eine nicht näher dargestellte Vorrichtung, üblicherweise ein Gebläse, zur Erzeugung eines mit dem Wärmeübertrager 3 und dem Innenheizkondensator 2 thermisch gekoppelten Luftstroms, in Figur 1 symbolisiert durch Pfeile, eine Dosiervorrichtung 6, mittels der eine Durchströmung des Innenheizkondensators mit zumindest einem Teilstrom des thermisch gekoppelten Luftstroms dosierbar ist, ein Absperrventil 7, mit dem die Beförderung von Kältemittel vom Innenwärmeübertrager 3 zur Niederdruckseite des Kompressors 1 ermöglicht und/oder unterbrochen werden kann, ein Umschaltventil 8 a und einen dem Kompressor niederdruckseitig vorgeschalteten Sammler 9, der jedoch optional ist. Die Dosiervorrichtung 6 ist vorzugsweise als Temperaturklappe ausgebildet, mit der der den Innenheizkondensator 2 beaufschlagende Luftstrom gelenkt und/oder unterbrochen werden kann. Die Vorrichtung zur Erzeugung des Luftstroms sowie die Dosiervorrichtung 6 sind gemeinsam in einem Gehäuse 30 eines Klimagerätes untergebracht, wobei es sich versteht, dass auch andere Konfigurationen dieser beiden Komponenten denkbar sind. Es versteht sich, dass die einzelnen Komponenten des Kältemittelkreislaufs über Kältemittelleitungen 20 miteinander verbunden sind.

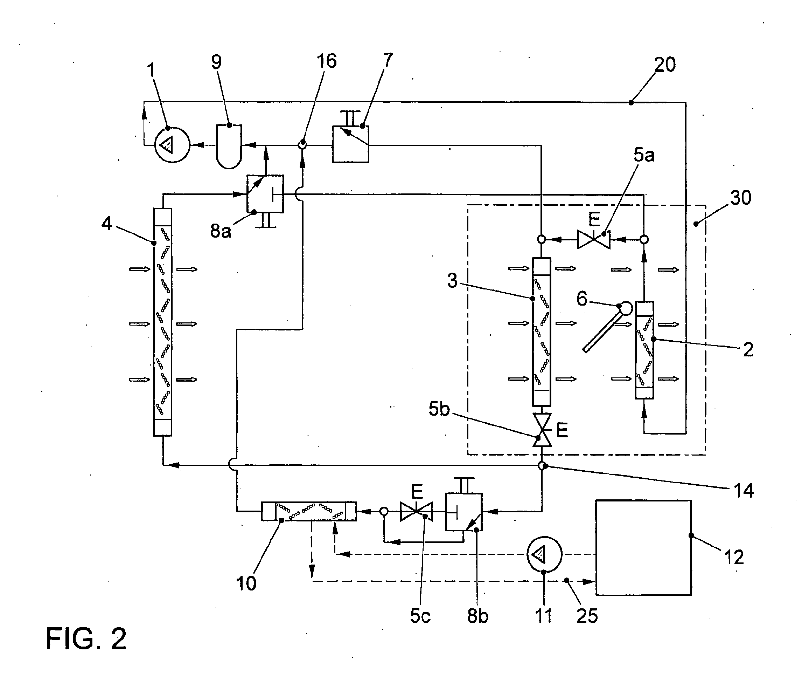

Figur 2 zeigt den Kältemittelkreislauf der Figur 1 im Wärmepumpenbetrieb, wobei zusätzlich noch ein optionaler mittels eines Fluid-Kältemittelwärmetauschers 10 thermisch mit der Klimaanlage verbundener Fluidkreislauf dargestellt ist, der zumindest eine fluidseitig mit dem Wärmekältemitteltauscher 10 verbundene Wärme- und/oder Kältesenke 12 umfasst. Zur thermischen Ankopplung des Fluidkreislaufs an den Kältemittelkreislauf ist eine Verzweigung 14 sowie ein Anschlusspunkt 16 im Kältemittelkreislauf vorgesehen. Zwischen der Verzweigung 14 und dem Anschlusspunkt 16 sind nacheinander ein Umschaltventil 8b, ein Expansionsventil 5c sowie der Fluid-Kältemittelwärmetauscher 10 angeordnet. Im Fluidkreislauf ist eine Pumpe 11 zur Förderung des Fluids des Fluidkreislaufs durch den Fluid-Kältemittelwärmetauscher angeordnet. Der Fluidkreislauf weist ferner Fluidleitungen 2 auf, die die verschiedenen Komponenten mit einander verbinden.

Im Wärmepumpenbetrieb wird das Kältemittel von der Hochdruckseite des Kompressors 1 direkt in den Innenheizkondensator 2 gefördert, durchströmt das erste Expansionsventil 5a, wird anschließend in den dem Expansionsventil 5a nachgeschalteten Innenwärmeübertrager 3 gefördert, daraufhin durch das beidseitig durchströmbare Expansionsventil 5b zur Nachgeschalteten Verzweigung 14 gefördert, von dieser zum Außenwärmeübertrager 4 befördert, wo es Wärme aufnehmen kann und anschließend zum nachgeschalteten Umschaltventil 8a gefördert. Vom Verzweigungspunkt 14 erfolgt eine Beförderung des Kältemittels in Abhängigkeit vom Schaltzustand des Umschaltventils 8b, worauf später eingegangen wird. Vom Umschaltventil 8a erfolgt eine Förderung des Kältemittels zur Niederdruckseite des Kompressors 1, gegebenenfalls über den zwischengeschalteten Sammler 9. Im in Figur 2 dargestellten Wärmepumpenbetrieb erfolgt eine Aufnahme bzw. Abgabe von Wärme, der dem Innenwärmetauscher 3 durchströmenden Luft Abhängigkeit von ihrem jeweiligen Zustand, insbesondere ihrer Temperatur. Die derart konditionierte Luft wird zumindest teilweise Abhängigkeit von der Stellung der Temperaturklappe 6 den Innenheizkondensator 2 zugeführt und von diesem erwärmt und im Fahrzeuginnenraum zugeführt. Das Umschaltventil 8b, ob in einem Schaltzustand, in dem das Kältemittel vom Verzweigungspunkt 14 durch den Fluid-Kältemittelwärmetauscher 10 gefördert wird, eine Wärmeaufnahme an der Wärmesenke bzw. eine Wärmeabgabe an die Kältesenke, je nach dem Temperaturniveau des im Fluidkreislaufs zirkulierenden Fluids. Eine Wärmeaufnahme wird verbessert, wenn das Kältemittel durch das Expansionsventil 5c gefördert und daher abgekühlt den Wärmetauscher 10 durchläuft. Nach Durchlauf des Fluid-Kältemittelwärmetauschers 10 wird das Kältemittel zum Anschlusspunkt 16 und anschließend zum nachgeschalteten Sammler 9 bzw. zur Niederdruckseite des Kompressors 1 gefördert.

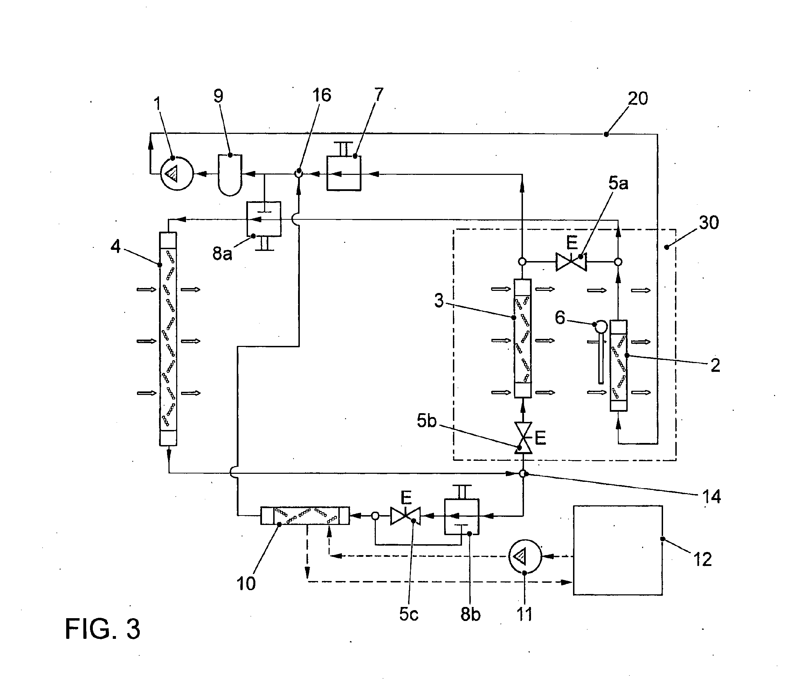

Figur 3 zeigt den Kältemittelkreislauf der Figur 1 in einem Kälteanlagenbetrieb, wobei Kältemittel von der Niederdruckseite des Kompressors 1 zum Innenheizkondensator 2, von diesem zum Umschaltventil 8a, von diesem zum Außenwärmeübertrager 4 und von diesem zum beidseitig durchströmbaren Expansionsventil 5b gefördert wird. Dem beidseitig durchströmbaren Expansionsventil ist optional die Verzweigung 14 vorgeschaltet über die Analogfigur 2 ein optionaler Wärmekreislauf mit einer Wärme- und/oder Kältesenke 12 thermisch mit der Klimaanlage gekoppelt werden kann. Das Kältemittel wird durch das Expansionsventil 5b und den Innenwärmeübertrager 3 über das geöffnete Expansionsventil 7 und den optionalen Sammler 9 zur Niederdruckseite des Kompressors 1 gefördert. Im Kälteanlagenbetrieb erfolgt keine Förderung von Kältemittel durch das Expansionsventil 5a; vorzugsweise ist das Expansionsventil 5a geschlossen. Aufbau und Funktion des Fluidkreislaufs in Figur 3 ist analog zu dem in Figur 2 dargestellten, wobei jedoch in Figur 3 ein Schaltzustand des Umschaltventils 8b dargestellt ist, bei dem Kältemittel durch das Expansionsventil 5c gefördert wird. Bei dem in Figur 3 dargestellten Kälteanlagenbetrieb des Kältekreislaufs ist die Temperaturklappe 6 in eine Stellung gebracht, bei der nur eine geringe Durchströmung, bspw. von weniger als 2,5 % des durch den Innenwärmeübertrager 3 geförderten Luftmassenstroms, durch den Innenheizkondensator 2 gefördert wird. Damit erfolgt nur eine geringe Heizung des Fahrzeuginnenraums.

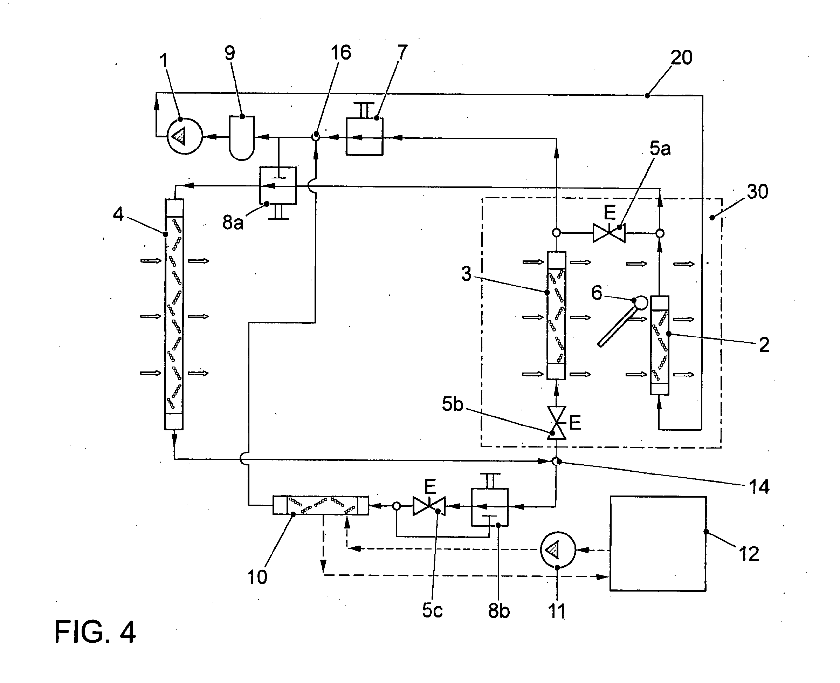

Figur 4 zeigt eine weitere Betriebsweise des erfindungsgemäßen Kältemittelkreislaufs, analog zu der Darstellung in Figur 4, wobei im Unterschied dazu die Temperaturklappe 6 eine Stellung einnimmt, bei der ein größerer Anteil des Luftmassenstroms, der durch den Wärmeübertrager strömenden Luftstroms den Innenheizkondensator 2 durchströmt. In der Darstellung der Figur 4 wird demnach der Kältekreislauf in einem Kälteanlagenbetrieb betrieben, wobei jedoch durch den Innenheizkondensator 6 eine Aufwärmung von zuvor vom Innenwärmeübertrager 3 getrockneter Luft erfolgt.

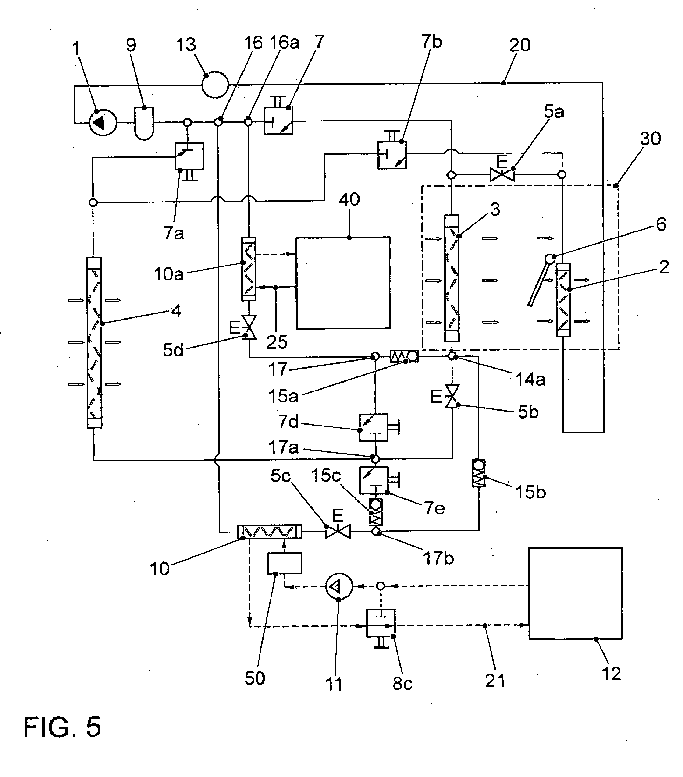

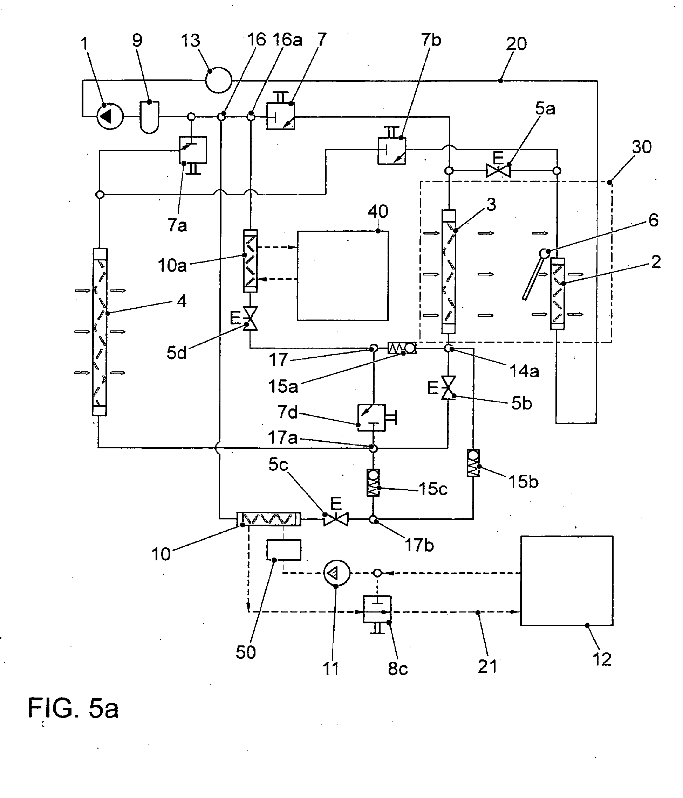

Figur 5 zeigt eine weitere Variante des Kältemittelkreislaufs der Figur 1, wobei jedoch im Unterschied zu den vorherigen Varianten ein Verzweigungspunkt 14a zwischen dem beidseitig durchströmbaren Expansionsventil 5b und dem Verdampfer 3 vorgesehen ist, stromaufwärts der Niederdruckseite des Kompressors 1 ist ein erster Anschlusspunkt 16 sowie ein zweiter Anschlusspunkt 16a vorgesehen. Zwischen der Verzweigung 14a und dem Anschlusspunkt 16 sind nacheinander ein Rückschlagventil 15b und ein Verzweigungspunkt 17b angeordnet. Zwischen dem Verzweigungspunkt 17b und dem Anschlusspunkt 16 sind im Kältemittelkreislauf ein Expansionsventil 5c sowie ein erster Fluid-Kältemittelwärmetauscher 10 angeordnet. Der Wärmetauscher 10 ist analog zu den Figuren 2 bis 4 über einen Fluidkreislauf an eine Wärme-/Kältesenke 12 thermisch gekoppelt. Zwischen der Wasserpumpe 11 und dem Wärmetauscher 10 ist fluidseitig ein Zusatzheizer 50, beispielsweise ein Wasser-PTC-Heizer, ein Brennstoffzuheizer oder eine Hochvoltbatterie geschaltet. Der Verzweigungspunkt 17 ist ferner mit dem Kältemittelkreislauf über einen Verzweigungspunkt 17a verbunden, der zwischen dem Expansionsventil 5b und dem Außenwärmetauscher 4 angeordnet ist. Zwischen dem Verzweigungspunkt 17a und dem Verzweigungspunkt 17b sind ein Absperrventil 7e und ein Rückschlagventil 15c angeordnet, wobei das Rückschlagventil 15c lediglich einen Durchfluss von Kältemittel vom Verzweigungspunkt 17a zum Verzweigungspunkt 17b zulässt. Zwischen dem Verzweigungspunkt 14a und dem zweiten Fluid-Kältemittelwärmetauscher 10a sind nacheinander ein Rückschlagventil 15a, ein Verzweigungspunkt 17 sowie ein Expansionsventil 5d angeordnet, wobei das Rückschlagventil 15a einen Durchfluss von Kältemittel nur vom Verzweigungspunkt 14a zum Verzweigungspunkt 17 zulässt. Zwischen dem Verzweigungspunkt 17 und dem Verzweigungspunkt 17a ist ein Absperrventil angeordnet.

Figur 5a zeigt eine Modifikation des in Figur 5 dargestellten Kältemittelkreislaufs, wobei zwischen dem Verzweigungspunkt 17a und dem Verzweigungspunkt 17b lediglich ein Rückschlagventil 15c angeordnet ist und das in Figur 5 vorgesehene Absperrventil fehlt. Falls das Expansionsventil 5c als schaltbares Expansionsventil ausgebildet ist, sind die Kältemittelkreisläufe der Figuren 5 und 5a, was die möglichen Kältemittelflüsse angeht, funktionsgleich.

In den Figuren 5 und 5a ist der Wärmetauscher 10a mit einer Wärme-/Kältesenke 40 verbunden, die analog zur Wärme-/Kältesenke 12 ausgebildet sein kann. Es versteht sich, dass fluidseitig ähnliche Komponenten wie zwischen dem Wärmetauscher 10 und der Wärme-/Kältesenke 12 vorgesehen sein können.

Die Anordnung des Verzweigungspunktes 14a vor dem Expansionsventil 5b ermöglicht eine bedarfsgerechte anteilsmäßige Aufteilung von Kältemittel, wobei die Aufteilung durch die Einstellung der elektrischen Expansionsventile 5b, 5c und 5d bestimmt werden kann. Mittels der Absperrventile 7d und 7e kann der Kältemittelfluss, insbesondere auch die im Kältemittelkreis vor den Wärmetauschern 14 und 14a besser geregelt werden. Es versteht sich, dass auch eine Ausführungsform von der Erfindung umfasst wird, bei der von der Verzweigung 14a lediglich eine Kältemittelleitung zum Verzweigungspunkt 16 bzw. zum Verzweigungspunkt 16a mit dazwischen geschalteten Wärmetauschern 10 bzw. 10a vorgesehen sind.

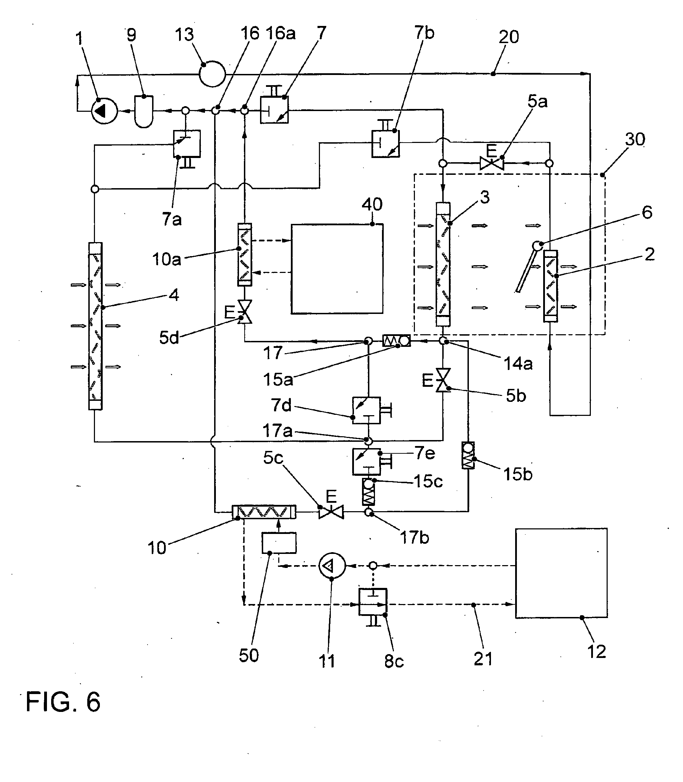

Figur 6 zeigt den Kältemittelkreislauf der Figur 5 bei einer Einstellung der Ventile 7d, 7e und 7a , bei der über die Wärmetauscher 10 und 10a gekühlt und geheizt wird, während der Außenwärmetauscher 4 außer Betrieb ist.

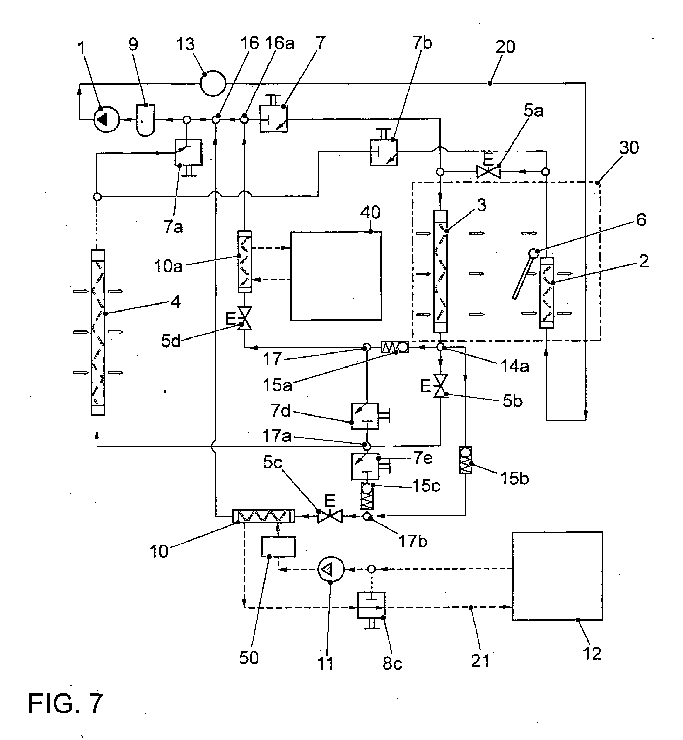

Figur 7 zeigt den Kältemittelkreislauf der Figur 5, wobei durch die Schaltung der Ventile 7a, 7d und 7e ein paralleles Heizen mit Wärmeenergie aus der Luft, Wärmeenergie aus der Wärme-/Kältesenke 12 oder dem Zusatzheizer 50 sowie aus der Wärme-/Kältesenke 40 erfolgen kann.

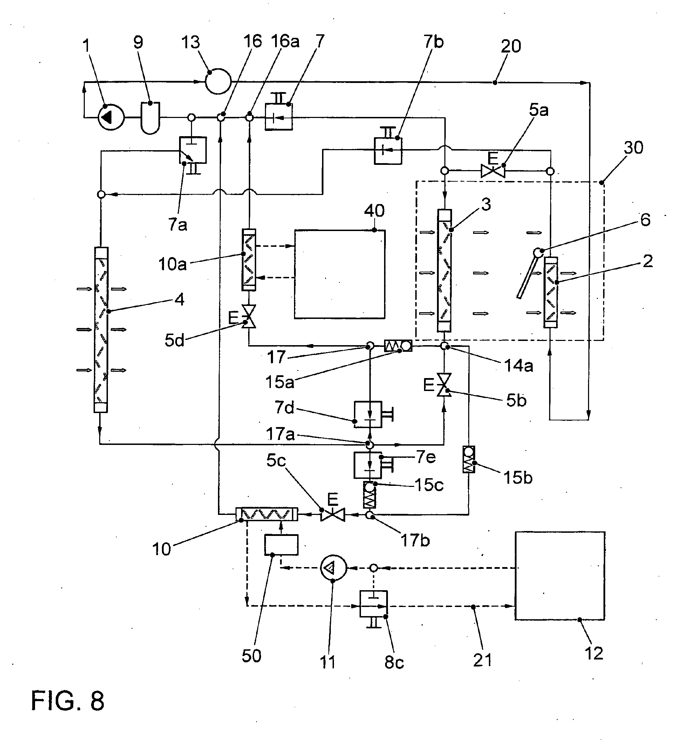

Figur 8 zeigt für den Kältemittelkreislauf der Figur 5 eine Einstellung der Ventile 7, 7a, 7b, bei der warmes Kältemittel dem Außenwärmetauscher 4 zugeführt werden kann und gleichzeitig der Fahrzeuginnenraum über den Heizkondensator 2 geheizt werden kann, wobei zusätzliche Wärmeenergie gegebenenfalls über die Wärme-/Kältesenke 12, den Zusatzheizer 50 sowie die Wärme-/Kältesenke 40 zugeführt werden kann.

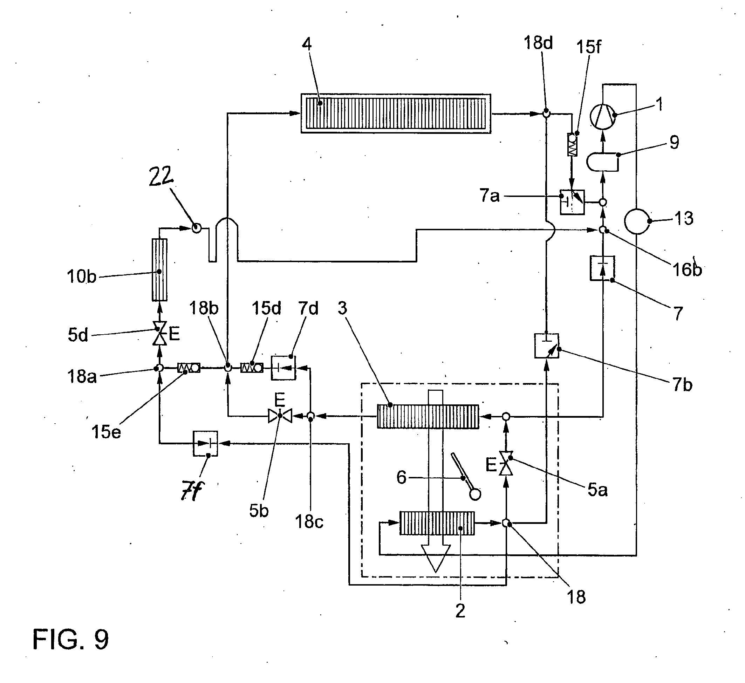

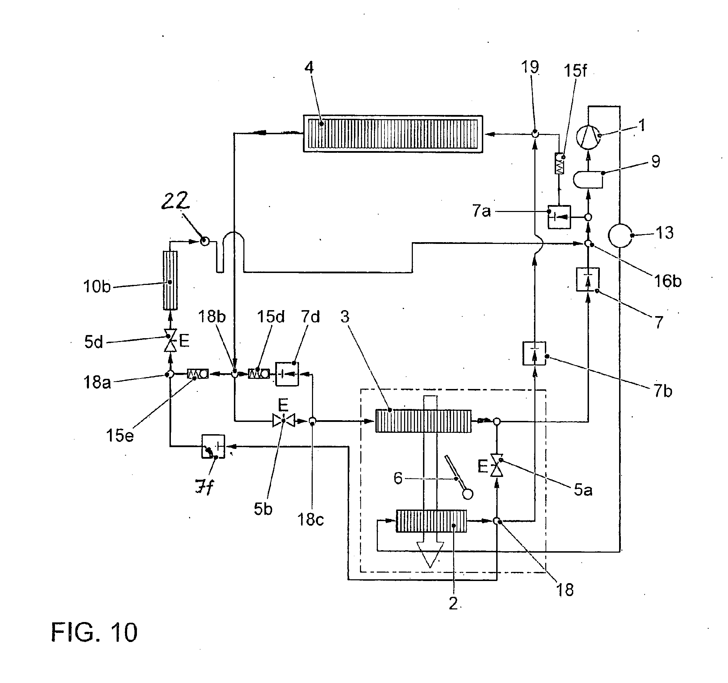

Eine weitere Modifikation des Kältemittelkreislaufs der Figur 1 ist in den Figuren 9 und 10 dargestellt. Im Kältemittelkreislauf beziehungsweise in einem zugehörigen Wärmepumpenkreislauf sowie Kälteanlagenkreislauf ist dabei zwischen dem Innenheizkondensator 2 und dem Expansionsventil 5a ein Verzweigungspunkt 18 angeordnet, sowie ein mit diesem verbundener Anschlusspunkt 16b, der stromaufwärts der Niederdruckseite des Kompressors angeordnet ist. Zwischen dem Verzweigungspunkt 18 und dem Anschlusspunkt 16b sind nacheinander ein Absperrventil 7f, ein Verzweigungspunkt 18a und in einem daran anschließendem Zweig ein Expansionsventil 5d und ein Fluid-Kältemittelwärmetauscher 10b angeordnet. In einem weiteren Zweig ist der Verzweigungspunkt 18a mit einem Verzweigungspunkt 18b verbunden, der zwischen dem Expansionsventil 5b und dem Außenwärmetauscher 4 angeordnet ist. Zwischen dem Verdampfer 3 und dem Expansionsventil 5b ist ein Bypass vorgesehen, der einen Verzweigungspunkt 18c, ein Absperrventil 7d sowie ein Rückschlagventil 15d aufweist, wobei der Verzweigungspunkt 18c mit dem Verzweigungspunkt 18b verbunden ist. Dieser Bypass erlaubt es den Verdampfer 3 und den Außenwärmeübertrager 4 im Wärmepumpenbetrieb in Reihenverschaltung auf gleichem Druckniveau zu betreiben. Dies ist insbesondere vorteilhaft für das Entfeuchten der Luft am Verdampfer 3 bei Außentemperaturen über etwa 3°C. Ein Kühlmittelfluss ist nur von dem Verzweigungspunkt 18c zum Verzweigungspunkt 18b und vom Verzweigungspunkt 18b zum Verzweigungspunkt 18a in den beschriebenen Abschnitten des Kältemittelkreislaufs möglich, da die Rückschlagventile eine andere Strömungsrichtung ausschließen. Zwischen Außenwärmetauscher 4 und dem Absperrventil 7 ist ein Verzweigungspunkt 18d angeordnet, wobei ein Zweig über ein Rückschlagventil 15f mit dem Absperrventil 7a verbunden ist. In der Darstellung der Figur 9 wird der Kältemittelkreislauf in einem Wärmepumpenbetrieb betrieben, wobei die Absperrventile 7a und 7b in jeweils eine Sperreinstellung gebracht sind. In einer alternativen Ausführungsform kann das Absperrventil 7f auch als Rückschlagventil ausgebildet sein. Die Signale bzw. Messwerte eines p,T-Sensors 22 zur Messung von Druck und/oder Temperatur dienen der Regelung des Kälteanlagenkreislaufs. In einer weitern nicht dargestellten Variante kann das Absperrventil 7d als Expansionsventil ausgeführt werden, wobei im Wärmepumpenbetrieb dieses Expansionsventil gemeinsam mit dem Expansionsventil 5b genutzt, beispielsweise gemeinsam geöffnet werden kann.

Figur 10 zeigt einen Kältemittelkreislauf analog zu Figur 9 in einem Kälteanlagenbetrieb, wobei das Absperrventil 7a gesperrt und das Absperrventil 7b geöffnet ist. Auch in dieser Ausführungsform kann über den Kältemittelwärmetauscher 10b Wärme oder Kälte in den Kältemittelkreislauf eingespeist werden.

### Bezugszeichenliste

- 1: Kompressor
- 2: Innenheizkondensator
- 3: Verdampfer
- 4: Außenwärmeübertrager
- 5a: Expansionsventil
- 5b: Expansionsventil
- 5c: Expansionsventil
- 5d: Expansionsventil
- 5e: Expansionsventil
- 6: Dosiervorrichtung
- 7, 7a, 7b, 7c, 7d, 7e, 7f: Absperrventil
- 8a, 8b, 8c, 8d, 8e, 8f: Umschaltventil
- 9: Sammler
- 10, 10a, 10b: Fluid-Kältemittelwärmetauscher
- 11: Fluidpumpe
- 12: Wärme-/Kältesenke
- 13: Schalldämpfer
- 14, 14a: Verzweigungspunkt
- 15a, 15b, 15c, 15d, 15e, 15f,: Rückschlagventil
- 16, 16a, 16b: Anschlusspunkt
- 17, 17a, 17b: Verzweigungspunkt
- 18, 18a, 18b, 18c: Verzweigungspunkt
- 19: Verzweigungspunkt
- 20: Kältemittelleitung
- 21: Fluidleitung
- 22: p,T-Sensor
- 25: Fluidleitung
- 30: Klimagerät
- 40: Wärme-/Kältesenke
- 50: Zuheizer

## Patentansprüche

1. Klimaanlage für ein Fahrzeug mit einem von einem Kältemittel durchströmbaren als Wärmepumpen- sowie einem Kälteanlagenkreislauf ausgebildeten Kältemittelkreislaufs und diesen zugeordnet, einem Kompressor (1), zumindest einem Außenwärmeübertrager (4), zumindest einem Innenwärmeübertrager (3), dem ein Innenheizkondensator (2) zugeordnet ist, wobei eine Vorrichtung zur Erzeugung eines mit dem Innenwärmeübertrager (3) und dem Innenheizkondensator (2) thermisch koppelbaren Luftstroms sowie einer Dosierungsvorrichtung (6), mittels der eine Durchströmung des Innenheizkondensators (2) mit zumindest einem Teilstrom des thermisch gekoppelten Luftstroms dosierbar ist, vorgesehen ist, **dadurch gekennzeichnet, dass**
- in einem Wärmepumpenbetrieb das Kältemittel von der Hochdruckseite des Kompressors (1) in den Innenheizkondensator (2) förderbar ist oder gefördert wird, vom Innenheizkondensator (2) durch ein erstes Expansionsventil (5a) zum Innenwärmeübertrager (3) förderbar ist oder gefördert wird, vom Innenwärmeübertrager (3) durch ein beidseitig durchströmbares Expansionsventil (5b) zum Außenwärmeübertrager (4) förderbar ist oder gefördert wird, vom Außenwärmeübertrager (4) zur Niederdruckseite des Kompressors (1) förderbar ist oder gefördert wird und
- in einem Kälteanlagenbetrieb das Kältemittel von der Hochdruckseite des Kompressors (1) in den Innenheizkondensator (2) förderbar ist oder gefördert wird, unter Umgehung des ersten Expansionsventils (5a) vom Innenheizkondensator (2) zum Außenwärmeübertrager (4) förderbar ist oder gefördert wird, vom Außenwärmeübertrager (4) durch das beidseitig durchströmbare Expansionsventil (5b) zum Innenwärmeübertrager (3), vom Innenwärmeübertrager (3) zur Niederdrucksseite des Kompressors (1) förderbar ist.

2. Klimaanlage nach Anspruch 1, **dadurch gekennzeichnet, dass** die Klimaanlage mittels eines ersten Fluid-Kältemittelwärmetauschers (10) thermisch mit einem Fluidkreislauf gekoppelt ist, der zumindest eine fluidseitig mit dem ersten Fluid-Kältemittelwärmetauscher (10) verbundene Wärme- und/oder Kältesenke (12) umfasst.

3. Klimaanlage nach Anspruch 2, **dadurch gekennzeichnet, dass** Wärmepumpenkreislauf sowie Kälteanlagenkreislauf zwischen dem beidseitig durchströmbaren Expansionsventil (5b) und dem Außenwärmeübertrager (4) einen ersten Verzweigungspunkt (14) und stromauf der Niederdruckseite des Kompressors (1) einen ersten Anschlusspunkt (16) aufweisen, wobei im Wärmepumpenbetrieb und/oder im Kälteanlagenbetrieb Kältemittel durch den ersten Fluid-Kältemittelwärmetauscher (10) vom Verzweigungspunkt (14) zum Anschlusspunkt (16) förderbar ist.

4. Klimaanlage nach Anspruch 3, **dadurch gekennzeichnet, dass** zwischen dem ersten Verzweigungspunkt (14) und dem ersten Fluid-Kältemittelwärmetauscher (10) ein zweites, vorzugsweise schaltbares Expansionsventil (5c) angeordnet ist.

5. Klimaanlage nach Anspruch 4, **dadurch gekennzeichnet, dass** im Wärmepumpenkreislauf sowie im Kälteanlagenkreislauf zwischen dem ersten Verzweigungspunkt (14) und dem ersten Fluid-Kältemittelwärmetauscher (10) ein von Kältemittel durchströmbares erstes Umschaltventil (8a) angeordnet ist, mittels dem die Förderung von Kältemittel zum ersten Fluid-Kältemittelwärmetauscher (10) unterbrochen oder durch das zweite Expansionsventil (5c) freigegeben oder mittels dem das zweite Expansionsventil (5c) überbrückt werden kann.

6. Klimaanlage nach einem der vorhergehenden Ansprüche, **dadurch gekennzeichnet, dass** ein vom Kältemittel durchströmbares zweites Umschaltventil (8b) vorgesehen ist, das im Wärmepumpenkreislauf stromabwärts des Außenwärmeübertragers (4) und stromaufwärts der Niederdruckseite des Kompressors (1) und im Kälteanlagenkreislauf stromabwärts des Innenheizkondensators (2) und stromaufwärts des Außenwärmeübertragers (4) angeordnet ist.

7. Klimaanlage nach einem der vorhergehenden Ansprüche, **dadurch gekennzeichnet, dass** ein vom Kältemittel durchströmbares Absperrventil (7) vorgesehen ist, das im Kälteanlagenkreislauf stromabwärts des Innenwärmetauschers (3) und stromaufwärts der Niederdruckseite des Kompressors (1) angeordnet ist.

8. Klimaanlage nach einem der vorhergehenden Ansprüche, **dadurch gekennzeichnet, dass** die Klimaanlage mittels eines zweiten Fluid-Kältemittelwärmetauschers (10a) thermisch mit einem zweiten Fluidkreislauf gekoppelt ist, der zumindest eine fluidseitig mit dem Fluid-Kältemittelwärmetauscher (10a) verbundene Wärme- und/oder Kältesenke (40) umfasst.

9. Klimaanlage nach Anspruch 8, **dadurch gekennzeichnet, dass** Wärmepumpenkreislauf sowie Kälteanlagenkreislauf zwischen dem Innenwärmeübertrager (3) und dem beidseitig durchströmbaren Expansionsventil (5b) zumindest einen zweiten Verzweigungspunkt (14a) und stromaufwärts der Niederdruckseite des Kompressors (1) einen ersten Anschlusspunkt (16) und zumindest einen zweiten Anschlusspunkt (16a) aufweisen, wobei im Wärmepumpenbetrieb und/oder im Kälteanlagenbetrieb Kältemittel durch den ersten Fluid-Kältemittelwärmetauscher (10) vom zumindest zweiten Verzweigungspunkt (14a) zum ersten Anschlusspunkt (16) und durch den zweiten Fluid-Kältemittelwärmetauscher (10a) vom zumindest zweiten Verzweigungspunkt (14a) zum zumindest zweiten Anschlusspunkt (16a) förderbar ist.

10. Klimaanlage nach Anspruch 1, **dadurch gekennzeichnet, dass** Wärmepumpenkreislauf sowie Kälteanlagenkreislauf zwischen dem Innenheizkondensator (2) und dem ersten Expansionsventil (5a) einen dritten Verzweigungspunkt (18) und stromaufwärts der Niederdruckseite des Kompressors (1) einen dritten Anschlusspunkt (16b) aufweisen, wobei zwischen dem dritten Verzweigungspunkt (18) und dem dritten Anschlusspunkt (16b) ein dritter Fluid-Kältemittelwärmetauscher (10b) angeordnet ist und im Wärmepumpenbetrieb und/oder im Kälteanlagenbetrieb Kältemittel durch den dritten Fluid-Kältemittelwärmetauscher (10b) vom dritten Verzweigungspunkt (18) zum dritten Anschlusspunkt (16b) förderbar ist.

11. Klimaanlage nach einem der vorhergehenden Ansprüche, **dadurch gekennzeichnet, dass** im ersten und/oder zweiten Fluidkreislauf ein Zusatzheizer (50) angeordnet ist, mittels dem Wärme in den Kälteanlagenkreislauf einspeisbar ist.

12. Verfahren zum Klimatisieren eines Fahrzeugs, **dadurch gekennzeichnet, dass** die Klimaanlage nach einem der vorhergehenden Ansprüche in einem Wärmepumpenbetrieb oder in einem Kälteanlagenbetrieb betrieben wird, wobei sowohl im Wärmepumpenbetrieb als auch im Kälteanlagenbetrieb das Kältemittel von der Hochdruckseite des Kompressors (1) in den Innenheizkondensator (2) gefördert wird.

13. Verfahren nach Anspruch 12, **dadurch gekennzeichnet, dass** das erste Expansionsventil (5a) im Wärmepumpenbetrieb von Kältemittel durchströmt und im Kälteanlagenbetrieb nicht von Kältemittel durchströmt wird.

14. Verfahren nach Anspruch 11 oder 12, **dadurch gekennzeichnet, dass** im Fall eines mit Eis beaufschlagten Außenwärmeübertragers (4) warmes Kältemittel nach Durchströmen des Heizinnenkondensators (2) direkt dem Außenwärmeübertrager (4) zum Abtauen zugeführt wird.

## Claims

1. Air-conditioning system for a vehicle, having a refrigerant circuit through which a refrigerant can flow and which is in the form of a heat pump circuit and a refrigeration system circuit, and having assigned to said refrigerant circuit a compressor (1), at least one exterior heat exchanger (4) and at least one interior heat exchanger (3) which is assigned an interior heating condenser (2), wherein a device is provided which serves for generating an air stream that can be thermally coupled to the interior heat exchanger (3) and to the interior heating condenser (2), and a dosing device (6) is provided by means of which a flow through the interior heating condenser (2) can have dosed thereto at least one partial stream of the thermally coupled air stream, **characterized in that**,
- in a heat pump mode, the refrigerant can be or is delivered from the high-pressure side of the compressor (1) into the interior heating condenser (2), can be or is delivered from the interior heating condenser (2) to the interior heat exchanger (3) through a first expansion valve (5a), can be or is delivered from the interior heat exchanger (3) to the exterior heat exchanger (4) through an expansion valve (5b) with bidirectional throughflow capability, and can be or is delivered from the exterior heat exchanger (4) to the low-pressure side of the compressor (1), and
- in a refrigeration system mode, the refrigerant can be or is delivered from the high-pressure side of the compressor (1) into the interior heating condenser (2), can be or is delivered from the interior heating condenser (2) to the exterior heat exchanger (4) so as to bypass the first expansion valve (5a), and can be delivered from the exterior heat exchanger (4) to the interior heat exchanger (3) through the expansion valve (5b) with bidirectional throughflow capability and from the interior heat exchanger (3) to the low-pressure side of the compressor (1).

2. Air-conditioning system according to Claim 1, **characterized in that** the air-conditioning system is thermally coupled by means of a first fluid-refrigerant heat exchanger (10) to a fluid circuit which comprises at least one heat and/or cold sink (12) which is connected to the fluid side of the first fluid-refrigerant heat exchanger (10).

3. Air-conditioning system according to Claim 2, **characterized in that** the heat pump circuit and refrigeration system circuit have a first branching point (14) between the expansion valve (5b) with bidirectional throughflow capability and the exterior heat exchanger (4), and have a first connection point (16) upstream of the low-pressure side of the compressor (1), wherein, in the heat pump mode and/or in the refrigeration system mode, refrigerant can be delivered through the first fluid-refrigerant heat exchanger (10) from the branching point (14) to the connection point (16).

4. Air-conditioning system according to Claim 3, **characterized in that** a second, preferably switchable expansion valve (5c) is arranged between the first branching point (14) and the first fluid-refrigerant heat exchanger (10).

5. Air-conditioning system according to Claim 4, **characterized in that** a first switching valve (8a) through which the refrigerant can flow is arranged, in the heat pump circuit and in the refrigeration system circuit, between the first branching point (14) and the first fluid-refrigerant heat exchanger (10), by means of which first switching valve the delivery of refrigerant to the first fluid-refrigerant heat exchanger (10) can be shut off or enabled by the second expansion valve (5c), or by means of which first switching valve the second expansion valve (5c) can be bypassed.

6. Air-conditioning system according to one of the preceding claims, **characterized in that** a second switching valve (8b) through which the refrigerant can flow is provided, which second switching valve is arranged downstream of the exterior heat exchanger (4) and upstream of the low-pressure side of the compressor (1) in the heat pump circuit and downstream of the interior heating condenser (2) and upstream of the exterior heat exchanger (4) in the refrigeration system circuit.

7. Air-conditioning system according to one of the preceding claims, **characterized in that** a shut-off valve (7) through which the refrigerant can flow is provided, which shut-off valve is arranged, in the refrigeration system circuit, downstream of the interior heat exchanger (3) and upstream of the low-pressure side of the compressor (1).

8. Air-conditioning system according to one of the preceding claims, **characterized in that** the air-conditioning system is thermally coupled by means of a second fluid-refrigerant heat exchanger (10a) to a second fluid circuit which comprises at least one heat and/or cold sink (40) which is connected to the fluid side of the fluid-refrigerant heat exchanger (10a).

9. Air-conditioning system according to Claim 8, **characterized in that** the heat pump circuit and refrigeration system circuit have at least one second branching point (14a) between the interior heat exchanger (3) and the expansion valve (5b) with bidirectional throughflow capability, and have a first connection point (16) and at least one second connection point (16a) upstream of the low-pressure side of the compressor (1), wherein, in the heat pump mode and/or in the refrigeration system mode, refrigerant can be delivered through the first fluid-refrigerant heat exchanger (10) from the at least second branching point (14a) to the first branching point (16) and through the second fluid-refrigerant heat exchanger (10a) from the at least second branching point (14a) to the at least second connection point (16a).

10. Air-conditioning system according to Claim 1, **characterized in that** the heat pump circuit and refrigeration system circuit have a third branching point (18) between the interior heat exchanger (2) and the first expansion valve (5a), and have a third connection point (16b) upstream of the low-pressure side of the compressor (1), wherein a third fluid-refrigerant heat exchanger (10b) is arranged between the third branching point (18) and the third connection point (16b), and, in the heat pump mode and/or in the refrigeration system mode, refrigerant can be delivered through the third fluid-refrigerant heat exchanger (10b) from the third branching point (18) to the third connection point (16b).

11. Air-conditioning system according to one of the preceding claims, **characterized in that**, in the first and/or second fluid circuit, there is arranged an auxiliary heater (50) by means of which heat can be fed into the refrigeration system circuit.

12. Method for the air conditioning of a vehicle, **characterized in that** the air-conditioning system according to one of the preceding claims is operated in a heat pump mode or in a refrigeration system mode, wherein, both in the heat pump mode and also in the refrigeration system mode, the refrigerant is delivered from the high-pressure side of the compressor (1) into the interior heating condenser (2).

13. Method according to Claim 12, **characterized in that** the first expansion valve (5a) is traversed by a flow of refrigerant in the heat pump mode and is not traversed by a flow of refrigerant in the refrigeration system mode.

14. Method according to Claim 11 or 12, **characterized in that**, in the event of ice being present in the exterior heat exchanger (4), warm refrigerant, after flowing through the interior heating condenser (2), is supplied directly to the exterior heat exchanger (4) for thawing purposes.

## Revendications

1. Installation de climatisation pour un véhicule comprenant un circuit de réfrigérant pouvant être parcouru par un réfrigérant et réalisé sous forme de circuit de pompe à chaleur et de circuit d'installation de refroidissement, et, associés à ceux-ci, un compresseur (1), au moins un dispositif de transfert thermique extérieur (4), au moins un dispositif de transfert thermique intérieur (3) auquel est associé un condenseur de chauffage intérieur (2), un dispositif étant prévu pour produire un flux d'air pouvant être accouplé thermiquement au dispositif de transfert thermique intérieur (3) et au condenseur de chauffage intérieur (2) et comprenant un dispositif de dosage (6) au moyen duquel un écoulement à travers le condenseur de chauffage intérieur (2) peut être dosé avec au moins un flux partiel du flux d'air accouplé thermiquement, **caractérisée en ce que**
- dans un mode de fonctionnement de pompe à chaleur, le réfrigérant peut être refoulé ou est refoulé par le côté haute pression du compresseur (1) dans le condenseur de chauffage intérieur (2), peut être refoulé ou est refoulé depuis le condenseur de chauffage intérieur (2) à travers une première soupape d'expansion (5a) jusqu'au dispositif de transfert thermique intérieur (3), peut être refoulé ou est refoulé depuis le dispositif de transfert thermique intérieur (3) par une soupape d'expansion (5b) pouvant être parcourue des deux côtés jusqu'au dispositif de transfert thermique extérieur (4), peut être refoulé ou est refoulé par le dispositif de transfert thermique extérieur (4) jusqu'au côté basse pression du compresseur (1) et
- dans un mode d'installation de refroidissement, le réfrigérant peut être refoulé ou est refoulé par le côté haute pression du compresseur (1) dans le condenseur de chauffage intérieur (2), en contournant la première soupape d'expansion (5a), peut être refoulé ou est refoulé par le condenseur de chauffage intérieur (2) jusqu'au dispositif de transfert thermique extérieur (4), peut être refoulé depuis le dispositif de transfert thermique extérieur (4) par la soupape d'expansion (5b) pouvant être parcourue des deux côtés jusqu'au dispositif de transfert thermique intérieur (3), et peut être refoulé par le dispositif de transfert thermique intérieur (3) jusqu'au côté basse pression du compresseur (1).

2. Installation de climatisation selon la revendication 1, **caractérisée en ce que** l'installation de climatisation est accouplée thermiquement à un circuit de fluide au moyen d'un premier échangeur de chaleur de réfrigérant-fluide (10), qui comprend au moins un dissipateur de chaleur et/ou de froid (12) connecté fluidiquement au premier échangeur de chaleur de réfrigérant-fluide (10).

3. Installation de climatisation selon la revendication 2, **caractérisée en ce que** le circuit de pompe à chaleur ainsi que le circuit d'installation de refroidissement présentent, entre la soupape d'expansion (5b) pouvant être parcourue des deux côtés et le dispositif de transfert thermique extérieur (4), un premier point de branchement (14) et, en amont du côté basse pression du compresseur (1), un premier point de raccordement (16), du réfrigérant pouvant être refoulé en mode de pompe à chaleur et/ou en mode d'installation de refroidissement à travers le premier échangeur de chaleur de réfrigérant-fluide (10) depuis le point de branchement (14) jusqu'au point de raccordement (16).

4. Installation de climatisation selon la revendication 3, **caractérisée en ce qu'**entre le premier point de branchement (14) et le premier échangeur de réfrigérant-fluide (10) est disposée une deuxième soupape d'expansion (5c) de préférence commutable.

5. Installation de climatisation selon la revendication 4, **caractérisée en ce que** dans le circuit de pompe à chaleur ainsi que dans le circuit d'installation de refroidissement est disposée, entre le premier point de branchement (14) et le premier échangeur de chaleur de réfrigérant-fluide (10), une première soupape de commutation (8a) pouvant être parcourue par du réfrigérant, au moyen de laquelle le refoulement de réfrigérant jusqu'au premier échangeur de chaleur de réfrigérant-fluide (10) peut être interrompu ou libéré par la deuxième soupape d'expansion (5c) ou au moyen de laquelle la deuxième soupape d'expansion (5c) peut être contournée.

6. Installation de climatisation selon l'une quelconque des revendications précédentes, **caractérisée en ce qu'**il est prévu une deuxième soupape de commutation (8b) pouvant être parcourue par le réfrigérant, laquelle est disposée dans le circuit de pompe à chaleur en aval du dispositif de transfert thermique extérieur (4) et en amont du côté basse pression du compresseur (1) et dans le circuit d'installation de refroidissement en aval du condenseur de chauffage intérieur (2) et en amont du dispositif de transfert thermique extérieur (4).

7. Installation de climatisation selon l'une quelconque des revendications précédentes, **caractérisée en ce qu'**il est prévu une soupape d'arrêt (7) pouvant être parcourue par le réfrigérant, laquelle est disposée dans le circuit d'installation de refroidissement en aval du dispositif de transfert thermique intérieur (3) et en amont du côté basse pression du compresseur (1).

8. Installation de climatisation selon l'une quelconque des revendications précédentes, **caractérisée en ce que** l'installation de climatisation est accouplée thermiquement au moyen d'un deuxième échangeur de chaleur de réfrigérant-fluide (10a) à un deuxième circuit de fluide, lequel comprend au moins un dissipateur de chaleur et/ou de froid (40) connecté fluidiquement à l'échangeur de chaleur de réfrigérant-fluide (10a).

9. Installation de climatisation selon la revendication 8, **caractérisée en ce que** le circuit de pompe à chaleur ainsi que le circuit d'installation de refroidissement présentent, entre le dispositif de transfert thermique intérieur (3) et la soupape d'expansion (5b) pouvant être parcourue des deux côtés, au moins un deuxième point de branchement (14a) et, en amont du côté basse pression du compresseur (1), un premier point de raccordement (16) et au moins un deuxième point de raccordement (16a), du réfrigérant pouvant être refoulé, en mode de pompe à chaleur et/ou en mode d'installation de refroidissement, à travers le premier échangeur de chaleur de réfrigérant-fluide (10) depuis au moins le deuxième point de branchement (14a) jusqu'au premier point de raccordement (16) et par le deuxième échangeur de chaleur de réfrigérant-fluide (10a) depuis au moins le deuxième point de branchement (14a) au moins jusqu'au deuxième point de branchement (16a).

10. Installation de climatisation selon la revendication 1, **caractérisée en ce que** le circuit de pompe à chaleur ainsi que le circuit d'installation de refroidissement présentent, entre le condenseur de chauffage intérieur (2) et la première soupape d'expansion (5a), un troisième point de branchement (18), et, en amont du côté basse pression du compresseur (1), un troisième point de raccordement (16b), un troisième échangeur de chaleur de réfrigérant-fluide (10b) étant disposé entre le troisième point de branchement (18) et le troisième point de raccordement (16b) et, en mode de pompe à chaleur et/ou en mode d'installation de refroidissement, du réfrigérant pouvant être refoulé par le troisième échangeur de chaleur de réfrigérant-fluide (10b) depuis le troisième point de branchement (18) jusqu'au troisième point de raccordement (16b).

11. Installation de climatisation selon l'une quelconque des revendications précédentes, **caractérisée en ce qu'**un dispositif de chauffage supplémentaire (50) est disposé dans le premier et/ou le deuxième circuit de fluide, au moyen duquel de la chaleur peut être injectée dans le circuit d'installation de refroidissement.

12. Procédé de climatisation d'un véhicule, **caractérisé en ce que** l'installation de climatisation selon l'une quelconque des revendications précédentes est entraînée en mode de pompe à chaleur ou en mode d'installation de refroidissement, le réfrigérant étant refoulé depuis le côté haute pression du compresseur (1) dans le condenseur de chauffage intérieur (2) à la fois en mode de pompe à chaleur et en mode d'installation de refroidissement.

13. Procédé selon la revendication 12, **caractérisé en ce que** la première soupape d'expansion (5a) est parcourue par du réfrigérant en mode de pompe à chaleur et n'est pas parcourue par du réfrigérant en mode d'installation de refroidissement.

14. Procédé selon la revendication 11 ou 12, **caractérisé en ce que** dans le cas d'un dispositif de transfert thermique extérieur (4) gelé, du réfrigérant chaud est directement acheminé en vue du dégivrage au dispositif de transfert thermique extérieur (4) après avoir parcouru le condenseur intérieur de chauffage (2).
